# EUROPEAN PATENT APPLICATION

(11) **EP 2 808 425 A1**
(43) Date of publication of application: **03.12.2014**
(21) Application number: 13741549.3
(22) Date of filing: 23.01.2013
(51) Int. Cl.: C25B 11/08, B01D 61/44, B01D 61/46, B01J 19/08, B01J 23/42, B01J 23/44, B01J 23/648, B01J 23/652, C25B 3/04, C25B 9/00, C25B 11/03

(54) **ELECTROCHEMICAL REDUCTION DEVICE AND METHOD FOR PRODUCING HYDRIDE OF NITROGEN-CONTAINING-HETEROCYCLIC AROMATIC COMPOUND OR AROMATIC HYDROCARBON COMPOUND**

(30) Priority: 24.01.2012 JP 2012012356
(71) Applicant: JX Nippon Oil & Energy Corporation, Chiyoda-ku Tokyo 100-8162 (JP)
(72) Inventor: SATO, Yasushi, Tokyo 100-8162 (JP); MIYOSHI, Kota, Tokyo 100-8162 (JP); NAKAGAWA, Kojiro, Tokyo 100-8162 (JP); KOBORI, Yoshihiro, Tokyo 100-8162 (JP)
(74) Representative: Algemeen Octrooi- en Merkenbureau B.V.
(86) International application number: PCT/JP2013/000332
(87) International publication number: WO 2013/111586

(57) **Abstract**

In the present invention, an electrolytic cell (100) has an electrolytic membrane (110), a reduction electrode (120), and an oxygen-generating electrode (130). The electrolytic membrane (110) is formed from a material (ionomer) having ion conductivity. The catalytic metal used in the reduction electrode (120) contains Pt and/or Pd, and a conductive compound contains an oxide, nitride, carbide, oxynitride, carbonitride, or partial oxide of a carbonitride of one or more metals selected from Ti, Zr, Nb, Mo, Hf, Ta, and W. The oxygen-generating electrode (130) contains a noble metal oxide catalyst such as RuO₂, IrO₂, or the like.

## Description

### Technical Field

The present invention relates to a device and a method of electrochemically hydrogenating either an aromatic hydrocarbon compound or a nitrogen-containing heterocyclic aromatic compound.

### Background Art

It is known that a cyclic organic compound such as cyclohexane or decalin can be efficiently obtained by hydrogenating at least one benzene ring of a corresponding aromatic hydrocarbon compound (benzene or naphthalene) with the use of hydrogen gas. This reaction requires reaction conditions of high temperature and high pressure, and hence it is not suitable for small and medium scale manufacturing of cyclic organic compounds. It is also known that, on the other hand, an electrochemical reaction using an electrolysis cell proceeds without gaseous hydrogen being required and under relatively mild reaction conditions (from normal temperature to approximately 200°C and normal pressure) because water can be used as a hydrogen source.

However, it is obvious that an electrode structure and electrode materials are required to be devised in order to reduce these compounds, each having low affinity with water and low electrical conductivity, by an electrochemical reaction using water as a raw material; and hence the development of an electrode catalyst, suitable for the present purpose, has been required to carry out an energy-saving and highly efficient reduction reaction for aromatic hydrocarbon compounds.

### Related Art Documents

### [Patent Documents]

[Patent Document 1] JP 2003-045449
[Patent Document 2] JP 2005-126288
[Patent Document 3] JP 2005-239479

### [Non-Patent Document]

[Non-Patent Document 1] Masaru Ichikawa, J. Jpn. Inst. Energy, vol. 85, 517 (2006)

### DISCLOSURE OF THE INVENTION

### Problem to be Solved by the Invention

As an example in which a benzene ring of an aromatic hydrocarbon compound such as toluene is electrochemically hydrogenated, a method is reported, in which toluene that is vaporized into a gaseous state is sent to the reduction electrode side to obtain methylcyclohexane, a benzene-ring hydrogenated substance, without going through a state of hydrogen gas in a configuration similar to that of water electrolysis (see Non-Patent Document 1); however, the amount of a substance that can be converted per electrode area and time (i.e., current density) is not large, and hence there is room for improving an electrode structure, in particular, the structure of a reduction electrode in order to increase the amount of a substance that can be processed per device volume.

When an aromatic hydrocarbon compound is electrochemically reduced, it is necessary to simultaneously perform, in a reduction electrode, the supply of: a proton transported from the other electrode (oxygen generating electrode); a hydroxy ion to be transported to the other electrode; an electron; and an aromatic hydrocarbon compound that is a raw material, and the discharge of a produced benzene-ring hydrogenated substance, hydride. In order to obtain a hydride by efficiently forming a reaction interface in these transfers of a proton, hydroxy ion, electron, and substance, for example to obtain cyclohexane from benzene by six-electron reduction or decalin from naphthalene by ten-electron reduction, it is necessary for an electrode catalyst to have a high activity and it is important for an electrode to have a three-dimensional structure suitable for forming the reaction interface. Also, an improvement in the stability of a benzene-ring hydrogenation reaction is a challenge for increasing the total production amount of a hydride of an aromatic hydrocarbon compound.

The present invention has been made in view of these situations, and a purpose of the invention is to provide a technique in which the persistence of a reaction can be improved, the reaction being carried out for electrochemically hydrogenating at least one benzene ring of an aromatic hydrocarbon compound or a nitrogen-containing heterocyclic aromatic compound.

### Means for Solving the Problem

An aspect of the present invention is an electrochemical reduction device. The electrochemical reduction device includes: an electrolyte membrane having ion conductivity; a reduction electrode that is provided on one side of the electrolyte membrane and includes, as a reduction catalyst, both a catalyst metal, as a metal for promoting a benzene-ring hydrogenation reaction for an aromatic hydrocarbon compound or a nitrogen-containing heterocyclic aromatic compound, and a porous conductive compound for supporting the catalyst metal; and an oxygen generating electrode provided on the other side of the electrolyte membrane, in which the catalyst metal includes at least one of Pt and Pd, and the conductive compound includes an oxide, nitride, carbide, oxynitride, carbonitride, or partial oxide of a carbonitride of: one or more metals selected from the group consisting of Ti, Zr, Nb, Mo, Hf, Ta, and W. Herein, the "ion conductivity" means "proton conductivity or hydroxy ion conductivity." The number of benzene rings to be hydrogenated in the benzene-ring hydrogenation for an aromatic hydrocarbon compound is not limited to 1 and may be 2 or more.

In the electrochemical reduction device of the aforementioned aspect, the catalyst metal may further include one or more metals selected from the group consisting of Cr, Mn, Fe, Co, Ni, Cu, Zn, Mo, Ru, Sn, W, Re, Pb, and Bi. The conductive material may have electrical conductivity of 1.0 × 10⁻² S/cm or more. The reduction electrode may include an ion conductor. The ion conductor may be an ion conducting polymer. The reduction catalyst may be partially coated with the ion conductor.

Another aspect of the present invention is a method of manufacturing a hydride of an aromatic hydrocarbon compound or a nitrogen-containing heterocyclic aromatic compound. In the method of manufacturing a hydride of an aromatic hydrocarbon compound or a nitrogen-containing heterocyclic aromatic compound, at least one benzene ring of the aromatic hydrocarbon compound or the nitrogen-containing heterocyclic aromatic compound, which has been introduced into the reduction electrode side, is hydrogenated by: introducing either the aromatic hydrocarbon compound or the nitrogen-containing heterocyclic aromatic compound into the reduction electrode side of the electrochemical reduction device of any one of the aforementioned aspects; circulating water or humidified gas to the oxygen generating electrode side of the device; and externally applying an electric field such that the reduction electrode has an electronegative potential and the oxygen generating electrode has an electropositive potential.

In the method of manufacturing a hydride of an aromatic hydrocarbon compound or a nitrogen-containing heterocyclic aromatic compound of the aforementioned aspect, the aromatic hydrocarbon compound or the nitrogen-containing heterocyclic aromatic compound may be introduced into the reduction electrode side in a liquid state at a reaction temperature.

Combinations of the aforementioned elements will also be within the scope of the present invention sought to be patented by the present patent application.

### Advantage of the Invention

According to the present invention, the persistence of a reaction for electrochemically hydrogenating at least one benzene ring of an aromatic hydrocarbon compound or a nitrogen-containing heterocyclic aromatic compound can be improved.

### BRIEF DESCRIPTION OF THE DRAWINGS

Fig. 1 is a schematic view illustrating the schematic configuration of an electrochemical reduction device according to an embodiment;
Fig. 2 is a view illustrating the schematic configuration of an electrolysis cell included in the electrochemical reduction device according to the embodiment;
Fig. 3 is a graph showing changes with time in current density in each of the electrolysis cells of Examples 1 and 2 and Comparative Examples 1 and 2;
Fig. 4 is a graph showing changes in relative current density, with the passage of time in a benzene-ring hydrogenation reaction, in each of the electrolysis cells of Examples from 1 to 8 and Comparative Examples 1 and 2; and
Fig. 5 is a graph showing changes in relative current density, with the passage of time in a benzene-ring hydrogenation reaction, in each of the electrolysis cells of Examples from 9 to 12 and Comparative Examples 3 and 4.

### BEST MODE FOR CARRYING OUT THE INVENTION

Hereinafter, embodiments of the invention will now be described with reference to the drawings. In the figures, like numerals represent like constituting elements and the description thereof will be appropriately omitted.

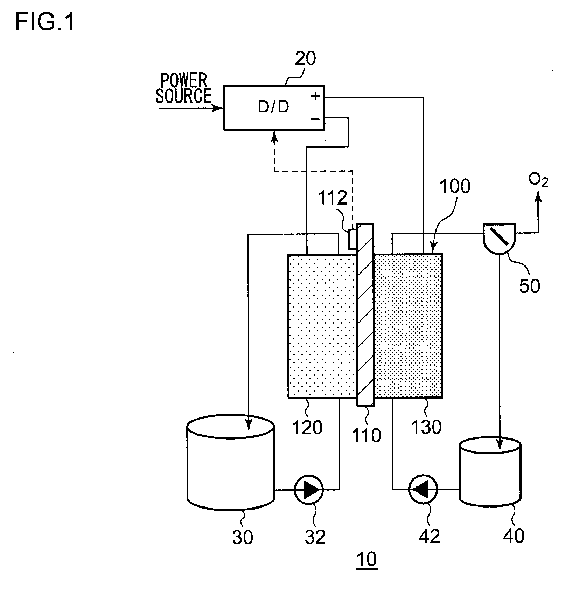

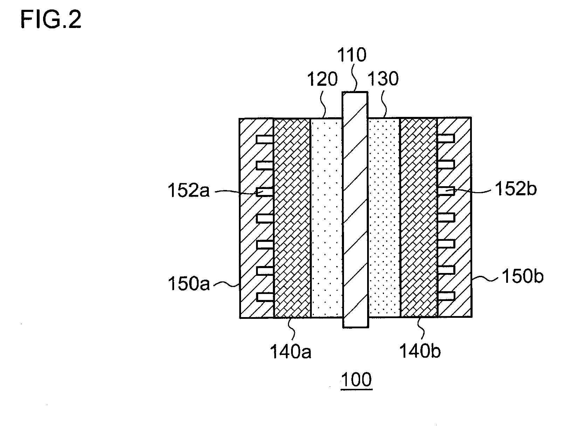

Fig. 1 is a schematic view illustrating the schematic configuration of an electrochemical reduction device according to an embodiment. Fig. 2 is a view illustrating the schematic configuration of an electrolysis cell included in the electrochemical reduction device according to the embodiment. As illustrated in Fig. 1, an electrochemical reduction device 10 comprises an electrolysis cell 100, a power control unit 20, an organic substance storage tank 30, a water storage tank 40, and a gas-water separation unit 50.

The power control unit 20 is, for example, a DC/DC converter for converting an output voltage of a power source into a predetermined voltage. A positive electrode output terminal of the power control unit 20 is connected to the positive electrode of the electrolysis cell 100. A negative electrode output terminal of the power control unit 20 is connected to the negative electrode of the electrolysis cell 100. Thereby, a predetermined voltage is applied between an oxygen generating electrode (positive electrode) 130 and a reduction electrode (negative electrode) 120 of the electrolysis cell 100. A reference electrode input terminal of the power control unit 20 is connected to a reference electrode 112 provided on the later-described electrolyte membrane 110, and the potentials of the positive electrode output terminal and the negative electrode output terminal are determined based on the potential of the reference electrode 112. As a power source, electrical power derived from natural energy such as sunlight and wind power can be used.

The organic substance storage tank 30 stores an aromatic compound. The aromatic compound used in the present embodiment is an aromatic hydrocarbon compound or a nitrogen-containing heterocyclic aromatic compound, which contains at least one aromatic ring, and examples thereof include benzene, naphthalene, anthracene, diphenylethane, pyridine, pyrimidine, pyrazine, quinoline, isoquinoline, N-alkylpyrrole, N-alkylindole, N-alkyldibenzopyrrole, and the like. From one to four hydrogen atoms of an aromatic ring of the aforementioned aromatic hydrocarbon or nitrogen-containing heterocyclic aromatic compound may be substituted by alkyl groups. However, the "alkyl" of the aromatic compound is a C₁₋₆ linear or branched alkyl group. For example, alkylbenzenes include toluene, ethyl benzene, and the like; dialkylbenzenes include xylene, diethylbenzene, and the like; and trialkylbenzenes include mesitylene and the like. Alkylnaphthalenes include methylnaphthalene and the like. An aromatic ring of the aforementioned aromatic hydrocarbon or nitrogen-containing heterocyclic aromatic compound may have from 1 to 3 substituents. In the following description, the aromatic hydrocarbon compound and the nitrogen-containing heterocyclic aromatic compound used in the present invention are sometimes referred to as "aromatic compounds". It is preferable that the aromatic compound is a liquid at room temperature. With this, the aromatic compound can be supplied to the electrolysis cell 100 in a liquid state without being treated by heat, pressure, or the like, so that the configuration of the electrochemical reduction device 10 can be simplified. The concentration of the aromatic compound in a liquid state is 0.1% or more, preferably 0.3% or more, and more preferably 0.5% or more.

The aromatic compound stored in the organic substance storage tank 30 is supplied to the reduction electrode 120 of the electrolysis cell 100 by a first liquid supply device 32. For the first liquid supply device 32, for example, various types of pumps such as a gear pump or a cylinder pump, or a gravity flow device or the like can be used. A circulation pathway is provided between the organic substance storage tank 30 and the reduction electrode of the electrolysis cell 100, so that the aromatic compound, at least one benzene ring of which has been hydrogenated by the electrolysis cell 100, and an unreacted aromatic compound are stored in the organic substance storage tank 30 after passing through the circulation pathway. No gas is generated by a major reaction that proceeds at the reduction electrode 120 of the electrolysis cell 100, but if hydrogen is by-produced, a gas-liquid separation device may be provided in the middle of the circulation pathway.

The water storage tank 40 stores ion-exchanged water, purified water, and the like (hereinafter, simply referred to as "water"). The water stored in the water storage tank 40 is supplied to the oxygen generating electrode 130 of the electrolysis cell 100 by a second liquid supply device 42. For the second liquid supply device 42, for example, various types of pumps such as a gear pump or a cylinder pump, or a gravity flow device or the like can be used, similarly to the first liquid supply device 32. A circulation pathway is provided between the water storage tank 40 and the oxygen generating electrode of the electrolysis cell 100, so that the water that has not been reacted in the electrolysis cell 100 is stored in the water storage tank 40 after passing through the circulation pathway. The gas-water separation unit 50 is provided in the middle of the pathway through which unreacted water is sent back to the water storage tank 40 from the electrolysis cell 100. With the gas-water separation unit 50, oxygen generated by electrolysis of water in the electrolysis cell 100 is separated from water and discharged to the outside of the system.

As illustrated in Fig. 2, the electrolysis cell 100 includes the electrolyte membrane 110, the reduction electrode 120, the oxygen generating electrode 130, liquid diffusion layers 140a and 140b, and separators 150a and 150b.

The electrolyte membrane 110 is formed of a material (ionomer) having ion conductivity, i.e., proton conductivity or hydroxy ion conductivity, and is required to suppress mixing or diffusion of substances between the reduction electrode 120 and the oxygen generating electrode 130 while selectively conducting a proton or a hydroxy ion. The thickness of the electrolyte membrane 110 is preferably from 5 to 300 µm, more preferably from 10 to 150 µm, and most preferably from 20 to 100 µm. If the thickness of the electrolyte membrane 110 is less than 5 µm, the barrier property thereof is deteriorated, causing the fear that an amount of cross leak may be increased. On the other hand, if the thickness of the electrolyte membrane 110 is more than 300 µm, ion transfer resistance becomes too large, which is not preferred.

The area resistance of the electrolyte membrane 110, that is, the ion transfer resistance per geometric area thereof is preferably 2000 mΩ·cm² or less, more preferably 1000 mΩ·cm² or less, and most preferably 500 mΩ·cm² or less. If the contact resistance of the electrolyte membrane 110 is more than 2000 mΩ·cm², proton conductivity becomes insufficient. When a material having proton conductivity (cation exchange ionomer) is used as an electrolyte, examples of the material include perfluorosulfonic acid polymers with trade names of Nafion (registered trademark), Flemion (registered trademark), and the like. The ion exchange capacity (IEC) of the cation exchange ionomer is preferably from 0.7 to 2 meq/g, and more preferably from 1 to 1.2 meq/g. If the ion exchange capacity thereof is less than 0.7 meq/g, ion conductivity becomes insufficient. On the other hand, if the ion exchange capacity of the cation exchange ionomer is more than 2 meq/g, the solubility of the ionomer in water is increased, and hence the strength of the electrolyte membrane 110 becomes insufficient.

The reduction electrode 120 is provided on one side of the electrolyte membrane 110. The reduction electrode 120 is a reduction electrode catalyst layer including a catalyst metal as a metal for promoting a benzene-ring hydrogenation reaction for an aromatic compound. The reduction electrode 120 includes the catalyst metal and a conductive compound as a reduction catalyst.

The reduction catalyst to be used in the reduction electrode 120 includes at least one of Pt and Pd as a first catalyst metal (noble metal). The catalyst metal to be used in the reduction electrode 120 may further include one or more second catalyst metals selected from the group consisting of Cr, Mn, Fe, Co, Ni, Cu, Zn, Mo, Ru, Sn, W, Re, Pb, and Bi. When the reduction catalyst to be used in the reduction electrode 120 includes the second catalyst metal, the form of the reduction catalyst is an alloy made of the first catalyst metal and the second catalyst metal, or an intermetallic compound made of the first catalyst metal and the second catalyst metal. The ratio of the first catalyst metal to the total mass of the first catalyst metal and the second catalyst metal is preferably 10 wt% or more, more preferably 20 wt% or more, and most preferably 25 wt% or more. If the ratio of the first catalyst metal is less than 10 wt%, durability may be deteriorated in terms of resistance to dissolving, and the like. In the following description, the first catalyst metal and the second catalyst metal are collectively referred to as a "catalyst metal" in some cases.

Herein, by including the second catalyst metal in the reduction electrode 120 and forming an alloy or intermetallic compound made of the first catalyst metal and the second catalyst metal, specific adsorption of an aromatic compound to the active spots of the catalyst metal can be suppressed. Thereby, the electrode activity of the reduction electrode 120 can be improved, and eventually the benzene-ring hydrogenation for an aromatic compound can be efficiently carried out.

It is preferable that the aforementioned catalyst metal is supported by a conductive compound (support). The electrical conductivity of the conductive compound is preferably 1.0 × 10⁻² S/cm or more, more preferably 3.0 × 10⁻² S/cm or more, and most preferably 1.0 × 10⁻¹ S/cm or more. If the electrical conductivity of the conductive material is less than 1.0 × 10⁻² S/cm, sufficient conductivity cannot be imparted. The conductive compound is used as a constituent of the electrode catalyst layer in the electrochemical reduction device of the present embodiment; however, if the conductivity is low, a resistance component in the electrode catalyst layer is increased, thereby not only causing the total energy conversion efficiency to be decreased due to a loss of energy (voltage) in the electrode catalyst layer, but also causing, when a real electrode potential is calculated by considering resistance components in controlling an electrode potential, a collected value of the real electrode potential (discrepancy with an apparent potential) to be increased, which is not preferred from the viewpoint of controllability. For example, when the thickness of the electrode catalyst layer on the reduction electrode side is 30 µm, and when the volume conductivity of the conductive compound is lower than 1.0 × 10⁻² S/cm, namely, the volume resistivity thereof is larger than 100 Ω·cm, the area resistivity per cm² of the electrode becomes 3 × 10⁻¹ Ω·cm²; and when an electrolysis reaction is carried out, for example, with a current density of 0.4 A/cm², a voltage loss of 120 mV is to be generated, such a great voltage drop not being allowed. The conductive compound includes a porous conductive material containing an oxide, nitride, carbide, oxynitride, carbonitride, or partial oxide of a carbonitride of: one or more metals selected from the group consisting of Ti, Zr, Nb, Mo, Hf, Ta, and W. The BET specific surface area of the conductive compound, measured by a nitrogen adsorption method, is preferably 1 m²/g or more, more preferably 3 m²/g or more, and most preferably 10 m²/g or more. If the BET specific surface area of the conductive compound is less than 1 m²/g, it becomes difficult to uniformly support the catalyst metal. Accordingly, the rate of utilizing the surface of the catalyst metal is decreased, causing the catalyst performance to be deteriorated. The conductive compound to be used in the present embodiment has a function as a support (carrier) for Pt or Pd that is a catalytically active metal. If the conductive compound has a BET specific surface area less than 1 m²/g, it becomes difficult to diffuse the metal when the catalyst is prepared, and it is also known that degradation, in which the active metals once diffused and supported are condensed or sintered, is likely to be caused.

The rate of a composition made of the first catalyst metal and the second catalyst metal to the total mass of the first and second catalyst metals and the support, in other words, a supporting rate is preferably from 1 to 90 wt%, more preferably from 3 to 75 wt%, and most preferably from 5 to 50 wt%. If the supporting rate is lower than 1 wt%, the activity per volume of the reduction electrode 120 becomes insufficient. On the other hand, if the supporting rate is higher than 90 wt%, it becomes difficult to highly diffuse the catalyst metal, and hence condensation is likely to be caused. In addition, because the amount of the noble metals is increased, the manufacturing cost of the reduction electrode 120 is raised.

A method of supporting the catalyst metal on the support is determined in accordance with the types of the first catalyst metal and the second catalyst metal and the composition thereof; however, examples of the method include: a simultaneous impregnation method in which the first catalyst metal and the second catalyst metal are simultaneously impregnated with a support; and a sequential impregnation method in which, after the first catalyst metal is impregnated with a support, the second catalyst metal is impregnated therewith. In the case of the sequential impregnation method, after the first catalyst metal is supported on a support, a heat treatment or the like may be performed once, followed by supporting the second catalyst metal on the support. After the impregnation of both the first catalyst metal and the second catalyst metal is completed, the first catalyst metal and the second catalyst metal are alloyed with each other or an intermetallic compound composed of the first catalyst metal and the second catalyst metal is formed by a heat treatment process.

To the reduction electrode 120, a material having conductivity, such as the aforementioned conductive oxide or carbon black, may be added separately from the conductive compound for supporting the catalyst metal. Thereby, the number of the electron-conducting pathways among reduction catalyst particles can be increased, which may reduce the resistance per geometric area of the reduction catalyst layer. When used as an additive that is not used as a catalyst metal support, a material having low resistance to corrosion, such as carbon black, is also used preferably.

The reduction electrode 120 may include, as an additive, a fluorine-based resin such as polytetrafluoroethylene (PTFE).

The reduction electrode 120 may include an ionomer having ion conductivity, i.e., proton conductivity or hydroxy ion conductivity. It is preferable that the reduction electrode 120 includes, at a predetermined mass ratio, an ion conducting substance (ionomer) having a structure that is identical or similar to that of the aforementioned electrolyte membrane 110. Thereby, the ion conductivity of the reduction electrode 120 can be improved. In particular, when the catalyst metal is porous, the ion conductivity can be greatly improved with the reduction electrode 120 including an ionomer having proton conductivity or hydroxy ion conductivity. When an ionomer having proton conductivity (cation exchange ionomer) is used as the ionomer, examples of the ionomer include perfluorosulfonic acid polymers with trade names of Nafion (registered trademark), Flemion (registered trademark), and the like. The ion exchange capacity (IEC) of the cation exchange ionomer is preferably from 0.7 to 3 meq/g, more preferably from 1 to 2. 5 meq/g, and most preferably from 1.2 to 2 meq/g. The mass ratio I/C of the cation exchange ionomer (I) to the porous conductive compound (support (C)) is preferably from 0.1 to 2, more preferably from 0.2 to 1.5, and most preferably from 0.3 to 1.1. If the mass ratio I/C is less than 0.1, it becomes difficult to obtain sufficient ion conductivity. On the other hand, if the mass ratio I/C is more than 2, the coating thickness of the catalyst metal, the coating being formed of the ionomer, is increased; and hence contact between the catalytic site of an aromatic compound that is a reactant and the catalyst metal may be hampered, or the electrode activity may be decreased due to a decrease in the electron conductivity.

Herein, the ionomer included in the reduction electrode 120 may be a material the same as or similar to the ionomer to be used in the electrolyte membrane 110. It is also preferable that the reduction catalyst is partially coated with the ionomer included in the reduction electrode 120. Thereby, three elements (aromatic compound, proton, electron), which are necessary for an electrochemical reaction at the reduction electrode 120, can be efficiently supplied to a reaction field.

The liquid diffusion layer 140a is laminated on the surface of the reduction electrode 120 on the side opposite to the electrolyte membrane 110. The liquid diffusion layer 140a has a function of uniformly diffusing a liquid aromatic compound supplied from the later-described separator 150a to the reduction electrode 120. For example, carbon paper or carbon cloth is used as the liquid diffusion layer 140a.

The separator 150a is laminated on the surface of the liquid diffusion layer 140a on the side opposite to the electrolyte membrane 110. The separator 150a is formed of a carbon resin, or a corrosion-resistant alloy of Cr-Ni-Fe, Cr-Ni-Mo-Fe, Cr-Mo-Nb-Ni, Cr-Mo-Fe-W-Ni, or the like. One or more groove-like flow channels 152a are provided on the surface of the separator 150a on the liquid diffusion layer 140a side. The liquid aromatic compound supplied from the organic substance storage tank 30 circulates through the flow channel 152a, and the liquid aromatic compound penetrates into the liquid diffusion layer 140a from the flow channel 152a. The form of the flow channel 152a is not particularly limited, but for example, a straight flow channel or a serpentine flow channel can be employed. When a metal material is used for the separator 150a, the separator 150a may be a structure formed by sintering sphere-like or pellet-like metal fine powders.

The oxygen generating electrode 130 is provided on the other side of the electrolyte membrane 110. For the oxygen generating electrode 130, a material, including a catalyst based on a noble metal oxide such as RuO₂ or IrO₂, is preferably used. These catalysts may be supported in a dispersed manner or coated on a metal substrate such as a metal wire or mesh made of metals such as Cr, Mn, Fe, Co, Ni, Cu, Zn, Nb, Mo, Ta, and W or of alloys composed primarily of these metals. In particular, when IrO₂ is used as a catalyst, manufacturing costs can be reduced by coating the metal substrate with a thin film because IrO₂ is expensive.

The liquid diffusion layer 140b is laminated on the surface of the oxygen generating electrode 130 on the side opposite to the electrolyte membrane 110. The liquid diffusion layer 140b has a function of uniformly diffusing the water supplied from the later-described separator 150b to the oxygen generating electrode 130. For example, carbon paper or carbon cloth is used as the liquid diffusion layer 140b.

The separator 150b is laminated on the surface of the liquid diffusion layer 140b on the side opposite to the electrolyte membrane 110. The separator 150b is formed of a corrosion-resistant alloy of Cr/Ni/Fe, Cr/Ni/Mo/Fe, Cr/Mo/Nb/Ni, Cr/Mo/Fe/W/Ni, or the like, or of a material formed by coating the surfaces of these metals with an oxide film. One or more groove-like flow channels 152b are provided on the surface of the separator 150b on the liquid diffusion layer 140b side. Water supplied from the water storage tank 40 circulates through the flow channel 152b, and the water penetrates into the liquid diffusion layer 140b from the flow channel 152b. The form of the flow channel 152b is not particularly limited, but for example, a straight flow channel or a serpentine flow channel can be employed. When a metal material is used for the separator 150b, the separator 150b may be a structure formed by sintering sphere-like or pellet-like metal fine powders.

In the present embodiment, liquid water is supplied to the oxygen generating electrode 130, but humidified gas (e.g., air) may be used instead of the liquid water. In this case, the dew-point temperature of the humidified gas is preferably from room temperature to 100°C, and more preferably from 50 to 100°C.

When toluene is used as an aromatic compound, reactions in the electrolysis cell 100 are as follows.

<Electrode Reaction at Oxygen Generating Electrode> 3H₂O→1.502 + 6H⁺ + 6e⁻ : E0 = 1.23 V

<Electrode Reaction at Reduction Electrode> Toluene + 6H⁺+ 6e⁻→methylcyclohexane : E0 = 0.153 V (vs RHE)

In other words, the electrode reaction at the oxygen generating electrode and that at the reduction electrode proceeds in parallel, and protons generated by electrolysis of water occurring due to the electrode reaction at the oxygen generating electrode is supplied to the reduction electrode via the electrolyte membrane 110, and used for the benzene-ring hydrogenation for an aromatic compound in the electrode reaction at the reduction electrode. In more detail, the electrochemical reactions are made to proceed at both the reduction electrode 120 and the oxygen generating electrode 130 by making the electrode potential of the reduction electrode 120 to be less than or equal to the standard redox potential E0 of an aromatic compound to be used as a raw material, and by making the electrode potential of the oxygen generating electrode 130 to be more than the oxygen generating potential. Accordingly, the voltage of the external electric field required to make these reactions to proceed is obtained by adding an overvoltage required for the reactions, an overvoltage required for substance transfer and diffusion, and a resistance loss (ohmic loss) generated by the resistance of the electrolyte membrane 110 to this potential difference. The voltage of the external electric field is preferably from 1.2 to 2.4 V, more preferably from 1.3 to 2.0 V, and most preferably from 1.35 to 1.6 V. If the voltage of the external electric field is lower than 1.2V, the electrode reactions do not proceed in theory, and hence it becomes difficult to industrially carry out the benzene-ring hydrogenation for an aromatic compound. On the other hand, if the voltage of the external electric field is higher than 2.4 V, the electric energy to be provided therefrom is excessively required, which is not preferred from the viewpoint of energy efficiency. Moreover, because the potential on the reduction electrode 120 side becomes too low, a side reaction (e.g., hydrogen generation), other than the benzene-ring hydrogenation for an aromatic compound, proceeds. In addition, because the potential on the oxygen generating electrode 130 side becomes too high, the catalyst used in the oxygen generating electrode 130 is likely to be corroded.

In addition to the above conditions, the following reaction conditions are preferably used for the benzene-ring hydrogenation for an aromatic compound using the electrochemical reduction device 10. The temperature of the electrolysis cell 100 is preferably from room temperature to 100°C, and more preferably from 40 to 80°C. If the temperature of the electrolysis cell 100 is lower than room temperature, there is the fear that the electrolysis reactions may be slowed down, or an enormous amount of energy is required to remove the heat generated as the reactions proceed, which is not preferred. On the other hand, if the temperature of the electrolysis cell 100 is higher than 100°C, water is brought to a boil at the oxygen generating electrode 130 and the vapor pressure of an organic substance is increased at the reduction electrode 120, which is not preferred for the electrochemical reduction device 10 in which reactions at both the electrodes are carried out in a liquid phase. The potential of the reduction electrode 120 is preferably from -100 to 150 mV (vs RHE), more preferably from -50 to 100 mV (vs RHE), and most preferably from -25 to 50 mV (vs RHE). If the potential of the reduction electrode 120 is lower than -10 mV (vs RHE), the reaction is in a competitive relationship with a hydrogen generation reaction and the selectivity in the organic substance reduction is deteriorated, which is not preferred. On the other hand, if the potential of the reduction electrode 120 is higher than 150 mV (vs RHE), practically sufficient rate of reaction (current density) cannot be obtained, which is not preferred.

A hydride obtained by the electrochemical reduction device 10 is, in principle, a perfect reductant of an aromatic compound used as a raw material, and when toluene is used as an aromatic compound, an obtained hydride is methylcyclohexane, as described above. Further, for example, when naphthalene is used as an aromatic compound, an obtained hydride is decalin.

The persistence of a benzene-ring hydrogenation reaction for an aromatic compound can be improved by combining, as described above, the catalyst metal (Pt, Pd) to be used in the reduction electrode 120 with the porous conductive compound including an oxide, nitride, carbide, oxynitride, carbonitride, or partial oxide of a carbonitride of: one or more metals selected from the group consisting of Ti, Zr, Nb, Mo, Hf, Ta, and W. As a result, it becomes possible to increase the total production amount of a hydride of an aromatic compound.

### (Relationship between Conductive Compound and Current Density)

Changes with time in current densities were evaluated, the changes with time occurring when toluene was subjected to a benzene-ring hydrogenation reaction by using: electrolysis cells of Examples from 1 to 8 in which a catalyst metal to be used in the reduction electrode was Pt and the types of conductive compounds serving as supports were different from each other; and those of Comparative Examples 1 and 2. The configurations and components used in the electrolysis cells of Examples from 1 to 8 and Comparative Examples 1 and 2 are shown in Table 1.

**[Table 1]**

| | REDUCTION ELECTRODE | | | | ELECTROLYTE MEMBRANE | | OXYGEN GENERATING ELECTRODE |
|---|---|---|---|---|---|---|---|
| | FIRST CATALYST METAL | CARRIER | IONOMER | THICKNESS (*µ*m) | ION CONDUCTOR | THICKNESS (*µ*m) | METAL CATALYST |
| EXAMPLE 1 | Pt | Ti₍₁₋ₓ₎NbₓO_{(2-y)} | Nafion DE2020 (EW=1100) I/C (CARRIER) =0.5 | 30 | Nafion 117CS (EW=1100) | 175 | IrO₂/Mo |
| EXAMPLE 2 | Pt | Ti₄O₇ | Nafion DE2020 (EW=1100) I/C (CARRIER) =0.5 | 30 | Nafion 117CS (EW=1100) | 175 | IrO₂/Mo |
| EXAMPLE 3 | Pt | TiCN | Nafion DE2020 (EW=1100) I/C (CARRIER) =0.5 | 30 | Nafion 117CS (EW=1100) | 175 | IrO₂/Mo |
| EXAMPLE 4 | Pt | ZrCN | Nafion DE2020 (EW=1100) I/C (CARRIER) =0.5 | 30 | Nafion 117CS (EW=1100) | 175 | IrO₂/Mo |
| EXAMPLE 5 | Pt | Ta₂O₅ | Nafion DE2020 (EW=1100) I/C (CARRIER) =0.5 | 30 | Nafion 117CS (EW=1100) | 175 | IrO₂/Mo |
| EXAMPLE 6 | Pt | TaCN | Nafion DE2020 (EW=1100) I/C (CARRIER) =0.5 | 30 | Nafion 117CS (EW=1100) | 175 | IrO₂/Mo |
| EXAMPLE 7 | Pt | TaCNO(DOO=0.65) | Nafion DE2020 (EW=1100) I/C (CARRIER) =0.5 | 30 | Nafion 117CS (EW=1100) | 175 | IrO₂/Mo |
| EXAMPLE 8 | Pt | WO₃ | Nafion DE2020 (EW=1100) I/C (CARRIER) =0.5 | 30 | Nafion 117CS (EW=1100) | 175 | IrO₂/Mo |
| COMPARATIVE EXAMPLE 1 | Pt | Ketjen black EC600JD | Nafion DE2020 (EW=1100) I/C (CARRIER) =0.5 | 30 | Nafion 117CS (EW=1100) | 175 | IrO₂/Mo |
| COMPARATIVE EXAMPLE 2 | Pt | SnO₂ | Nafion DE2020 (EW=1100) I/C (CARRIER) =0.5 | 30 | Nafion 117CS (EW=1100) | 175 | IrO₂/Mo |

Conditions of a benzene-ring hydrogenation reaction are as follows.

Total Mass of Reduction Catalyst Metal: 0.5 mg/cm²
Potential of Reduction Electrode: 0 mV (vs RHE)
Ionomer Ratio (Mass Ratio I/C): 1

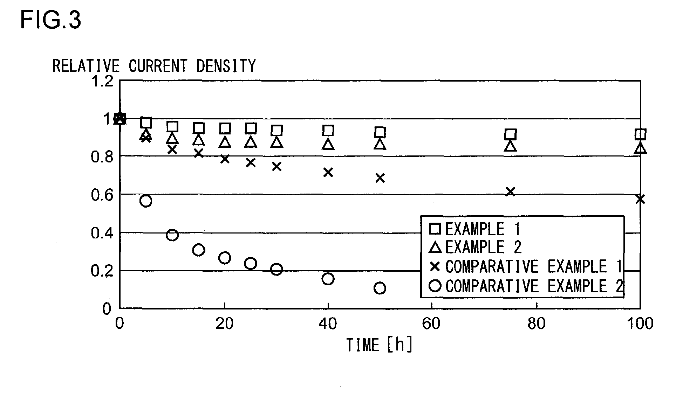

Fig. 3 is a graph showing changes with time in the current density in each of the electrolysis cells of Examples 1 and 2 and Comparative Examples 1 and 2. In Fig. 3, the initial value of the current density was set to 1. As shown in Fig. 3, the electrolysis cells of Examples 1 and 2 exhibited relative current densities of 0.85 or more even after 100 hours passed, and hence it has been confirmed that they are excellent in the persistence of a reaction for generating a hydride of an aromatic compound. On the other hand, in Comparative Example 1 in which Ketjen black having conductivity was used as a support and Comparative Example 2 in which non-conductive SnO₂ was used as a support, relative current densities were gradually decreased as time passed.

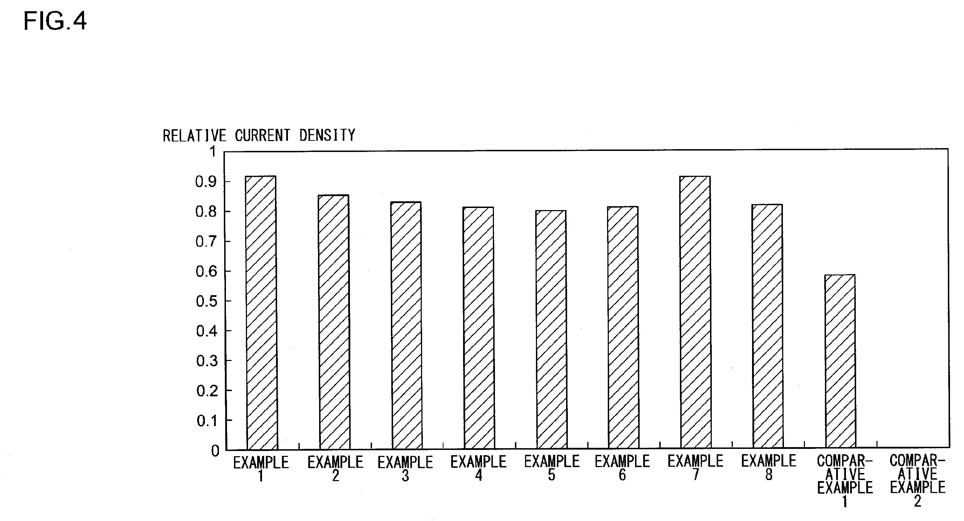

Fig. 4 shows changes in relative current density, with the passage of time in a benzene-ring hydrogenation reaction. Specifically, Fig. 4 is a graph showing changes in the current density occurring when a benzene-ring hydrogenation reaction was carried out by using each of the electrolysis cells of Examples from 1 to 8 and Comparative Examples 1 and 2, and before the passage of time reached 100 hours or before the relative current density became lower than 0.2. In Fig. 4, the initial value of each of the current densities in Examples from 1 to 8 and Comparative Examples 1 and 2 was set to 1. As shown in Fig. 4, the electrolysis cells of Examples 1, 2, and 7 exhibited relative current densities of 0.85 or more and those of Examples from 3 to 6 and 8 exhibited relative current densities of 0.8 or more, even after 100 hours passed, and hence it has been confirmed that they are excellent in the persistence of a reaction for generating a hydride of an aromatic compound. On the other hand, in Comparative Example 1 in which Ketjen black having conductivity was used as a support, the relative current density was 0.6 or less, and in Comparative Example 2 in which non-conductive SnO₂ was used as a support, the relative current density was decreased to 0.2 or less before the passage of time reached 100 hours, and hence the hydrogenation reaction was stopped.

Changes with time in current densities were evaluated, the changes with time occurring when toluene was subjected to a benzene-ring hydrogenation reaction by using: electrolysis cells of Examples from 9 to 12 in which a catalyst metal to be used in the reduction electrode was Pd and the types of conductive compounds serving as supports were different from each other; and those of Comparative Examples 3 and 4. The configurations and components used in the electrolysis cells of Examples from 9 to 12 and Comparative Examples 3 and 4 are shown in Table 2.

**[Table 2]**

| | REDUCTION ELECTRODE | | | | ELECTROLYTE MEMBRANE | | OXYGEN GENERATING ELECTRODE |
|---|---|---|---|---|---|---|---|
| | FIRST CATALYST METAL | CARRIER | IONOMER | THICKNESS (*µ*m) | ION CONDUCTOR | THICKNESS (*µ*m) | METAL CATALYST |
| EXAMPLE 9 | Pd | Ti₍₁₋ₓ₎NbₓO_{(2-y)} | Nafion DE2020 (EW=1100) I/C (CARRIER) =0.5 | 30 | Nafion 117CS (EW=1100) | 175 | IrO₂/Mo |
| EXAMPLE 10 | Pd | Ti₄O₇ | Nafion DE2020 (EW=1100) I/C (CARRIER)=0.5 | 30 | Nafion 117CS (EW=1100) | 175 | IrO₂/Mo |
| EXAMPLE 11 | Pd | ZrCN | Nafion DE2020 (EW=1100) I/C (CARRIER) =0.5 | 30 | Nafion 117CS (EW=1100) | 175 | IrO₂/Mo |
| EXAMPLE 12 | Pd | TaCNO (ODD=0.65) | Nafion DE2020 (EW=1100) I/C (CARRIER) =0.5 | 30 | Nafion 117CS (EW=1100) | 175 | IrO₂/Mo |
| COMPARATIVE EXAMPLE 3 | Pd | Ketjen black EC600JD | Nafion DE2020 (EW=1100) I/C (CARRIER) =0.5 | 30 | Nafion 117CS (EW=1100) | 175 | IrO₂/Mo |
| COMPARATIVE EXAMPLE 4 | Pd | SnO₂ | Nafion DE2020 (EW=1100) I/C (CARRIER) =0.5 | 30 | Nafion 117CS (EW=1100) | 175 | IrO₂/Mo |

Conditions of a benzene-ring hydrogenation reaction are as follows.
Total Mass of Reduction Catalyst Metal: 0.5 mg/cm²
Potential of Reduction Electrode: 0 mV (vs RHE)
Ionomer Ratio (Mass Ratio I/C): 1

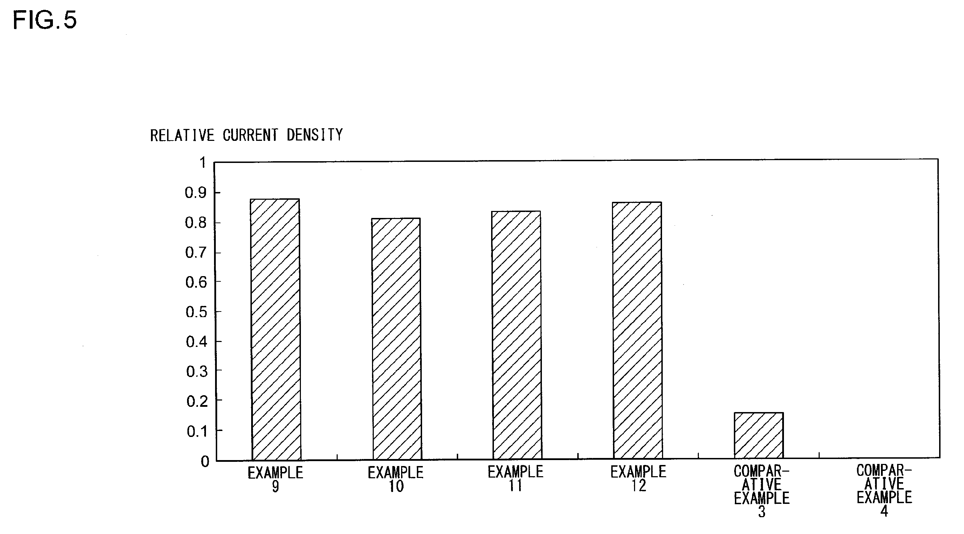

Fig. 5 shows changes in relative current density, with the passage of time in the benzene-ring hydrogenation reaction. Specifically, Fig. 5 is a graph showing changes in the current density occurring when a benzene-ring hydrogenation reaction was carried out by using each of the electrolysis cells of Examples from 9 to 12 and Comparative Examples 3 and 4, and before the passage of time reached 100 hours or before the relative current density became lower than 0.2. In Fig. 5, the initial value of each of the current densities in Examples from 9 to 12 and Comparative Examples 3 and 4 was set to 1. As shown in Fig. 5, the electrolysis cells of Examples 9 to 12 exhibited relative current densities of 0.8 or more even after 100 hours passed, and hence it has been confirmed that they are excellent in the persistence of a reaction for generating a hydride of an aromatic compound. On the other hand, in Comparative Example 3 in which Ketjen black having conductivity was used as a support, the relative current density was decreased to 0.2 or less, and in Comparative Example 4 in which non-conductive SnO₂ was used as a support, the relative current density was decreased to 0.1 or less.

The present invention is not limited to the aforementioned embodiments, and various modifications, such as a design change, can be added thereto based on knowledge of those skilled in the art, and any embodiment to which such modifications are added can also be included in the scope of the present invention.

### Description of Reference Numerals

- 10: ELECTROCHEMICAL REDUCTION DEVICE
- 20: POWER CONTROL UNIT
- 30: ORGANIC SUBSTANCE STORAGE TANK
- 40: WATER STORAGE TANK
- 50: GAS-WATER SEPARATION UNIT
- 100: ELECTROLYSIS CELL
- 110: ELECTROLYTE MEMBRANE
- 120: REDUCTION ELECTRODE
- 130: OXYGEN GENERATING ELECTRODE
- 140a, 140b: LIQUID DIFFUSION LAYER
- 150a, 150b: SEPARATOR

### Industrial Applicability

The present invention can be used in a technique for electrochemically hydrogenating an aromatic hydrocarbon compound.

## Claims

1. An electrochemical reduction device comprising:
an electrolyte membrane having ion conductivity;
a reduction electrode that is provided on one side of the electrolyte membrane and includes, as a reduction catalyst, both a catalyst metal, as a metal for promoting a benzene-ring hydrogenation reaction for an aromatic hydrocarbon compound, and a porous conductive compound for supporting the catalyst metal; and
an oxygen generating electrode provided on the other side of the electrolyte membrane, wherein
the catalyst metal includes at least one of Pt and Pd, and wherein
the conductive compound includes an oxide, nitride, carbide, oxynitride, carbonitride, or partial oxide of a carbonitride of: one or more metals selected from the group consisting of Ti, Zr, Nb, Mo, Hf, Ta, and W.

2. The electrochemical reduction device according to claim 1, wherein
the catalyst metal further includes one or more metals selected from the group consisting of Cr, Mn, Fe, Co, Ni, Cu, Zn, Mo, Ru, Sn, W, Re, Pb, and Bi.

3. The electrochemical reduction device according to claim 1 or claim 2, wherein
the conductive compound has electrical conductivity of 1.0 × 10⁻² S/cm or more.

4. The electrochemical reduction device according to any one of claims 1 to 3, wherein
the reduction electrode includes an ion conductor.

5. The electrochemical reduction device according to claim 4, wherein
the ion conductor is an ion conducting polymer.

6. The electrochemical reduction device according to claim 4 or claim 5, wherein
the reduction catalyst is partially coated with the ion conductor.

7. A method of manufacturing a hydride of an aromatic hydrocarbon compound or a nitrogen-containing heterocyclic aromatic compound, wherein
at least one benzene ring of the aromatic hydrocarbon compound or the nitrogen-containing heterocyclic aromatic compound is hydrogenated: by introducing either the aromatic hydrocarbon compound or the nitrogen-containing heterocyclic aromatic compound into the reduction electrode side of the electrochemical reduction device according to any one of claims 1 to 6; by circulating water or humidified gas to the oxygen generating electrode side of the device; and by externally applying an electric field such that the reduction electrode has an electronegative potential and the oxygen generating electrode has an electropositive potential.

8. The method of manufacturing a hydride of an aromatic hydrocarbon compound or a nitrogen-containing heterocyclic aromatic compound according to claim 7, wherein
the aromatic hydrocarbon compound or the nitrogen-containing heterocyclic aromatic compound to be introduced into the reduction electrode side is introduced in a liquid state at a reaction temperature.
